# EUROPEAN PATENT APPLICATION

(11) **EP 3 296 772 A1**
(43) Date of publication of application: **21.03.2018**
(21) Application number: 17190486.5
(22) Date of filing: 11.09.2017
(51) Int. Cl.: G01W 1/00, G01S 17/95, G01S 13/95

(54) **APPARATUS AND METHOD TO DETECT AND AVOID PARTICLES**

(30) Priority: 16.09.2016 US 201662395628 P; 27.10.2016 US 201615336332
(71) Applicant: Honeywell International Inc., Morris Plains, NJ 07950 (US)
(72) Inventor: NORTHCUTT, Brett Gordon, Morris Plains, NJ 07950 (US); JONGSMA, Kenneth R., Morris Plains, NJ 07950 (US); BENSER, Earl Thomas, Morris Plains, NJ 07950 (US); MCKENNA, Chris, Morris Plains, NJ 07950 (US)
(74) Representative: Houghton, Mark Phillip

(57) **Abstract**

A vehicle system is provided. The vehicle system comprises a weather sensor to provide long-range weather information, including the presence of large particles, where such long-range weather information is configured to be stored in a three dimensional volumetric representation, from which a two dimensional display and hazard information can be derived; a particle sensor to provide short-range weather information about the presence of small and large particles, wherein the particle sensor is able to differentiate between different types and sizes of particles; and at least one user interface configured to communicate weather information derived from the weather sensor and particle sensor.

## Description

### CROSS-REFERENCED TO RELATED APPLICATION

This application claims the benefit of provisional U.S. Patent Application Ser. No. 62/395,628 filed September 16, 2016, which is incorporated herein by reference in its entirety.

### BACKGROUND

Modern aircraft include weather radar to detect weather systems, such as rain, hail, lightening, and turbulence, preferably avoided by the aircraft. Radar and particle detectors can detect dust, ice and ash particles proximate to an aircraft. Such particles can cause catastrophic failure of an aircraft. Therefore, there is a need for a system to guide the aircraft away from such particles.

### SUMMARY

A vehicle system is provided. The vehicle system comprises a weather sensor to provide long-range weather information, including the presence of large particles, where such long-range weather information is configured to be stored in a three dimensional volumetric representation, from which a two dimensional display and hazard information can be derived; a particle sensor to provide short-range weather information about the presence of small and large particles, wherein the particle sensor is able to differentiate between different types and sizes of particles; and at least one user interface configured to communicate weather information derived from the weather sensor and particle sensor.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1A illustrates a diagram of an exemplary vehicle network;
Figure 1B illustrates a diagram of an exemplary aircraft network;
Figure 2 illustrates a block diagram of an exemplary vehicle;
Figure 3 illustrates a block diagram of an exemplary vehicle processing system; and
Figure 4 illustrates an exemplary flow diagram of a method of the operation of the vehicle network.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and electrical changes may be made. Furthermore, the method presented in the drawing figures and the specification is not to be construed as limiting the order in which the individual steps may be performed. The following detailed description is, therefore, not to be taken in a limiting sense.

In one embodiment, a vehicle system including a weather sensor, *e.g.* a weather radar, a particle sensor, and user interface(s), such as a display and an alarm may be used to overcome the above referenced problems. The embodiments of such a vehicle system have at least one advantage.

The vehicle system detects, and advises the operator of the vehicle, when the vehicle is in a weather system having fine and/or coarse particles. In another embodiment, the vehicle system can further instruct the operator of the vehicle of alternative path(s) avoiding such fine and/or coarse particles. In a further embodiment, the vehicle system can automatically change the vehicle's path to avoid such fine and/or coarse particles.

In one embodiment, the alarm, when triggered by the presence of fine and/or coarse particles proximate to the particle sensor, and thus the vehicle, alerts the vehicle operator to the presence of such articles. Fine and coarse particles may be dust, ice, liquid, or ash such as volcanic ash. In another embodiment, the alarm may differ depending upon the type and size of particles sensed. Often, fine particles are located proximate to coarse particles. When the operator(s) of the vehicle learn that their vehicle is proximate to particles, particularly fine particles, the display assists the pilot to circumvent the particles by providing information directing the vehicle and its operator(s) away from coarse particles, and thus avoiding damage to the vehicle.

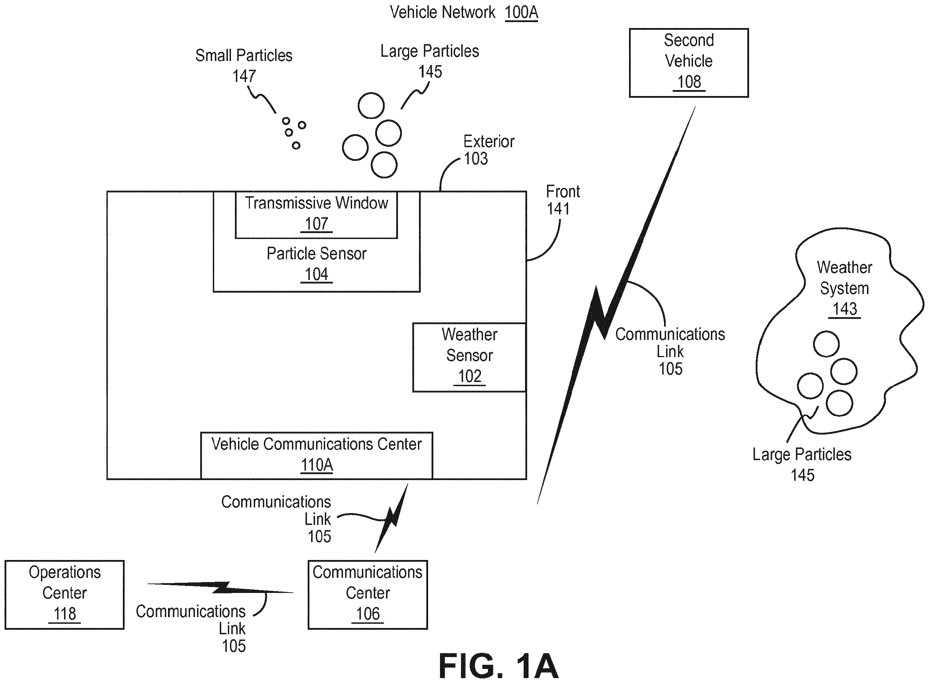

Figure 1A illustrates a vehicle network 100A. The vehicle network 100A includes a vehicle 101A including a weather sensor 102 and particle sensor 104. In one embodiment, the weather sensor 102 is located in the front 141 of the vehicle 101A, and can sense information about weather systems 143 (weather information) in weather system(s) 143 before the vehicle 101A. However, in alternative embodiments, the weather sensor 102 may sense weather information in other directions, such as in weather system(s) 143 above and below the vehicle 101A. In yet a further embodiment, the weather sensor 102 (or part thereof) can be conformally placed on the exterior 103 (or part thereof) of the vehicle.

In another embodiment, the weather sensor 102 senses weather information, including detecting large particles 145 (about 100 microns and larger in diameter), at a relatively long range, *e.g.* up to 300 nautical miles, from the vehicle 101A. In another embodiment, the particle sensor 104 detects small particles 147 (about 100 microns and smaller in diameter) and large particles 145 at short range, *e.g.* proximate to the vehicle 101A. However, in another embodiment, each of the short range distance and long range distance can be different then what has been previously specified. For example, the short range distance may project further from the vehicle 101A. In another embodiment, the short range and long range distances can overlap. However long range means a range longer than short range; short range means a range shorter than long range and more proximate to the vehicle 101A. Thus, short range weather information means weather information more proximate to the vehicle, and long range weather information means weather information at a longer distance from the vehicle 101A than short range weather information.

In yet a further embodiment, the particle sensor 104 can respectively detect the densities of the small particles 147 and the large particles 145. Such information would be part of the weather information stored in the database described below.

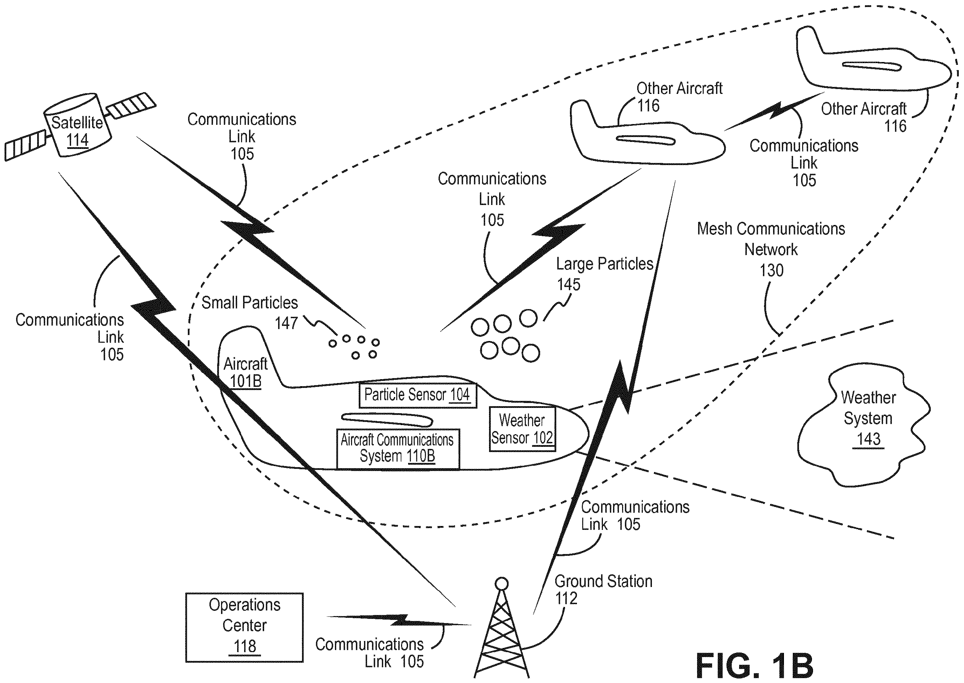

In another embodiment, the particle sensor 104 is an optical particle sensor such as the type disclosed in the US Patent Application to Baumgardner et al., having a publication number of US201403303459 A1 published on November 6, 2014, which is hereby incorporated by reference. The particle sensor 104 can be mounted on the exterior of the vehicle (as illustrated in Figure 1B), or alternatively may be mounted in the interior of the vehicle (as illustrated in Figure 1A) but next to a light transmissive window 107, *e.g.* a transparent aperture, through which exterior light can be examined.

In another embodiment, the vehicle 101A includes a vehicle communications system 110A that is capable of transmitting and receiving weather information, respectively to and/or from, *e.g.* a communications system 106 or a second vehicle 108 through a communications link 105. Such transmission and receipt of weather information is conveyed to the vehicle communications system 110A through a communications link 105 which may be free space for direct wireless communications, a satellite, a cellular network, or any other communications network. The communications system 106 may be, *e.g.* on land, sea, air or in space. For example the communications system 106 can be located at an operations center 118, at a ground station, on a ship, on other vehicles, or on a satellite.

In a further embodiment, an operations center 118 may collect and serve as a repository for worldwide weather information, including information about fine particles 147 and coarse particles 145. The operations center 118 can collect weather information from a variety of sources, including without limitation other vehicles, national or commercial weather services, and notices to airmen (NOTAM). In another embodiment, the operations center 118 can communicate, *e.g*. through the communications system 106, weather information for weather system(s) 143 proximate to the path of the vehicle 101A. In a further embodiment, the operations center 118 is communicates with eh communications center 106 through a communications link 105. In yet another embodiment, the operations center 118 may provide such weather information to the vehicle 101A on a subscription basis for which the operator of the vehicle 101A pays a fee to the operator of the operations center 118.

For pedagogical purposes, the invention is described with respect to Figure 1B in terms of aircraft. However, it is understood that the teachings herein are applicable to other types of vehicles, such as an aircraft. Thus, a pilot of an aircraft would more generically be an operator of a vehicle. Figure 1B illustrates an embodiment of a vehicle network 100A that is an aircraft network 100B. In one embodiment, the weather sensor 102 is located in the nose of the aircraft 101B, and can sense weather information about weather systems 143 in a conical region before the aircraft 101B. The aircraft 101B includes a particle sensor 104 to sense small particles 147 and/or large particles 145.

In another embodiment, the aircraft 101B includes an aircraft communications system 110B that is capable of transmitting and receiving weather information, respectively to and/or from, a communications center 106 which includes one or more of the following: a ground station 112, a satellite 114, and/or another aircraft 116. In one embodiment, the ground station 112 may communicate weather information to the other aircraft 116 or satellite, which then may relay it to the aircraft 101B. The ground station 112 may be on land or at sea, *e.g.* on a ship.

In yet a further embodiment, there may be more than one other aircraft 116. In another embodiment, the more than one other aircraft 116 form a mesh communications network 130 to share weather information amongst each of the aircraft. Thus, sources of weather information (weather information sources) include the operations center 118 and/or vehicles 101A, such as aircraft.

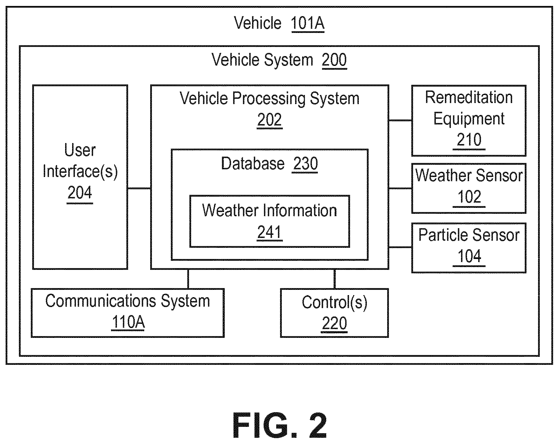

Figure 2 illustrates a vehicle system 200, which in one embodiment, may be in and/or on a vehicle 101A. The vehicle system 200 includes a vehicle processing system 202, such as a flight computer, a weather sensor 102, a particle sensor 104, user interface(s) 204, remediation equipment 210, and control(s) 220. Each of the weather sensor 102, particle sensor 104, user interface(s) 204, and remediation equipment 210 are coupled to the vehicle processing system 202. The control(s) 220 are coupled to the vehicle system 200, and, in one embodiment, to the vehicle processing system 202. In one embodiment, the vehicle processing system 202 stores weather information 241. In another embodiment, the vehicle processing system stores weather information 241 in a database 230.

In one embodiment, the user interface(s) 204 can be one or more of a radar display, such as a plan position indicator, text display, and audio alert (*e.g*. sound or voice). User interface(s) 204 may also be referred to as input / output devices (I/O). The user interface(s) 204 are used to communicate weather information 241 to the operator of the vehicle 101A. In one embodiment, the radar display shows a two dimensional representation of three dimensional weather information about weather systems 143, *e.g*. around the vehicle 101A. Further, the user interface(s) 204 can project hazard alerts based upon the three dimensional weather information, such as issuing an audio alert notifying the vehicle operator of the presence of small particles 147 and/or large particles 145. The remediation equipment 210 can be one or more de-icers (*e.g*. heaters on leading edges of wings and in engine nacelles) and air filtration for the engines.

The control(s) 220 adjust the vector velocity of the vehicle 101A, and may include brakes, control surfaces (*e.g*. rudder, ailerons, and flaps), and propulsion systems such as jet or propeller engines. Such jet and propeller engines are housed in nacelles. In one embodiment, the control(s) 220 may be manually controlled by the operator of the vehicle 101A. In an alternative embodiment, the vehicle system 200, *e.g.* the vehicle processing system 202, may adjust the control(s) 220.

In one embodiment, as the vehicle 101A travels towards its destination, its weather sensor 102 maps the weather systems 143 in front of the vehicle 101A. The vehicle processing system 202 stores a corresponding three dimensional volumetric representation of weather information 241 (including any data for small particles 147 and large particles 145 (particle data)) for weather system 143 the vehicle 101A has mapped, and for any weather region(s) 143 for which the vehicle 101A has been remotely provided weather information 241. In a further embodiment, the three dimensional volumetric representation of weather information 241 is stored in the database 230. Thus, in one embodiment, other weather information 241 (including particle data) for other weather system 143 can be communicated to the vehicle 101A from, *e.g*. the operations center 118, through one or more communication systems 106, and/or a second vehicle 108. In another embodiment, a second vehicle 108 can relay weather information 241 to the vehicle 101A.

If the vehicle system 200 in the vehicle 101A detects a weather system 143 of small particles 147 and/or large particles 145 ahead in its flight path, the vehicle system 200 can alert the operator, *e.g*. pilot, of the vehicle 101A. In another embodiment, the vehicle system 200 can provide the operator with alternative path(s) to avoid such weather systems, *e.g*. displayed on the user interface(s) 204. In a further embodiment, the pilot can manually change the path of the vehicle 101A to avoid the weather system 143 of small particles 147 and/or large particles 145, *e.g.* by selecting one of the alternative path(s). Alternatively, in yet another embodiment, the vehicle system 200 can automatically select one of the alternative path(s), adjust the control(s) 220, and thus automatically divert the vehicle 101A from its original path. The operator or the vehicle system 200 would be able to ascertain (from weather information 241 generated by the weather sensor 102 and/or remotely provided as described above) where there were other weather systems 143 without small particles 147 and/or large particles 145 through which the vehicle 100A could travel to reach its destination.

In one embodiment, small particles 147 occur in the presence of large particles 145. The presence of small particles 147 and large particles 145 can be more problematic, *e.g*. with respect to icing, than the existence of just large particles 145. Thus, even if the vehicle 101A was not remotely provided weather information 241, *e.g*. including the location of small particles 147, the vehicle 101A, *e.g*. through operator or automatic control, by the vehicle processing system 202, avoid the small particles 147 by also avoiding nearby weather system 143 with large particles 145.

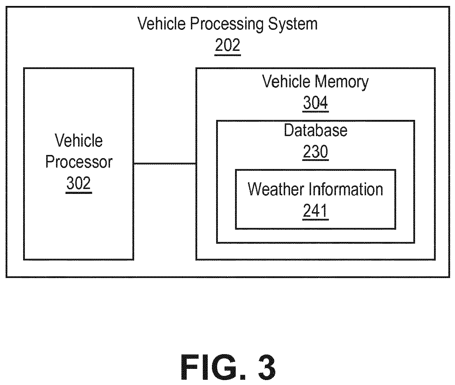

Figure 3 illustrates one embodiment of a vehicle processing system 202. The vehicle processing system 202 includes a vehicle processor 302 coupled to a vehicle memory 304. In one embodiment, weather information 241 is stored in the vehicle memory 304. In another embodiment, the vehicle memory 304 includes a database 230, and weather information 241 is stored in the database 230. In a further embodiment, a three dimensional volumetric representation of weather information 241 (including any particle data) is stored in the vehicle memory 304, *e.g.* in the database 230. For example, such weather information 241 may be for weather system(s) 143 mapped by the vehicle 101A, and for any weather system(s) 143 for which the vehicle 101A has been remotely provided weather information 241. In a further embodiment, the vehicle processing system 202, *e.g.* the vehicle processor 302, manipulates such weather information 241 to provide the operator of the vehicle 101A with information and alerts, *e.g*. through the user interface(s) 204, about the corresponding weather information 241, *e.g.* the presence of small particles 147 and large particle 145.

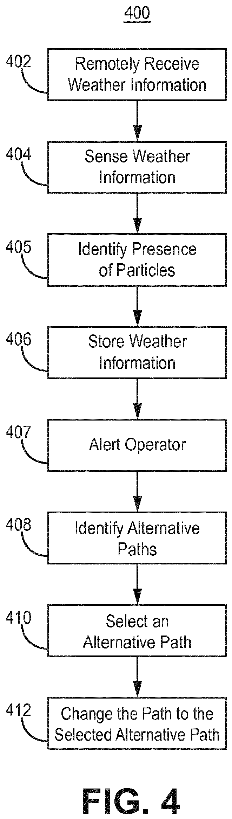

Exemplary operation of the vehicle 101A will now be described. Figure 4 illustrates one embodiment of operation 400 of the vehicle network 100A.

In block 402, receive weather information 241 remotely from a weather information source. In one embodiment, the weather information 241 is for weather system(s) 143 in the flight path of the vehicle 101A. In another embodiment, the weather information 241 includes information about small particles 147 and/or large particles 145.

In block 404, sense weather information 241 with the weather sensor 102 and the particle sensor 104. In another embodiment, sense whether small particles 147 and/or large particles 145 are present. In a further embodiment, sense the sized and/or density of the small particles 147 and/or large particles 145. In yet another embodiment, sense the type of particles, *e.g*. dust, ash, ice or liquid particles. In a further embodiment, transmit the sensed weather information 241 to an operations center 118 and/or to other vehicle(s).

In block 405, identify the presence of problematic particles, *e.g*. particles proximate to the vehicle 101A which may harm the vehicle 101A, based upon the sensed weather information 241. In one embodiment, the alert notifies the operator of problematic particles proximate to the vehicle 101A. In a further embodiment, the alert notifies the operator of the vehicle 101A about the size of the particles. In yet a further embodiment, the alert notifies the operator of the respective densities of the particles.

In block 406 store weather information 241, including information about small particles 147 and/or large particles 145, *e.g.* in a database 241. As described above, the weather information 241 may be stored as a three dimensional representation of the corresponding weather system(s) 143.

In block 407, notify, or alert, the operator of the vehicle 101A of the presence of small particles 147 and/or large particles 145 proximate to the vehicle 101A which may be harmful to the vehicle 101A,

In block 408, identify alternative path(s) to avoid the harmful particles. In one embodiment, in the presence of small particles 147 and large particles 145, identify alternative path(s) that avoids known large particles 145. In another embodiment, identify alternative path(s) that avoid known small particles 147 and large particles 145. In a further embodiment, the vehicle processing system 202 identifies the alternative path(s). In yet a further embodiment, the operator of the vehicle 101A identifies the alternative path(s).

In block 410, select an alternative path. In one embodiment, the operator of the vehicle 101A selects the alternative path. In a further embodiment, the vehicle processing system 202 selects the alternative path. Then, in block 412, alter, or change, the path of the vehicle 101A to the selected alternative path, *e.g*. either automatically or under vehicle operator control.

### EXEMPLARY EMBODIMENTS

Example 1 includes a vehicle system comprising: a weather sensor to provide long-range weather information, including the presence of large particles, where such long-range weather information is configured to be stored in a three dimensional volumetric representation, from which a two dimensional display and hazard information can be derived; a particle sensor to provide short-range weather information about the presence of small and large particles, wherein the particle sensor is able to differentiate between different types and sizes of particles; and at least one user interface configured to communicate weather information derived from the weather sensor and particle sensor.
Example 2 includes the vehicle system of Example 1, wherein the weather sensor is a weather radar.
Example 3 includes the vehicle system of Example 1, wherein the weather sensor is able to provide long-range weather information for a range of up to at least 300 nautical miles.
Example 4 includes the vehicle system of Example 1, wherein the particles detected by the particle sensor include at least one of dust particles, liquid particles, ice particles or ash particles.
Example 5 includes the vehicle system of Example 1, further comprising a vehicle processing system configured to identify at least one alternative path to avoid particles detected by the weather sensor and the particle sensor.
Example 6 includes the vehicle system of Example 5, wherein the vehicle processing system includes a database configured to store the three dimensional volumetric representation of weather information; and wherein the three dimensional volumetric representation is configured to include short range and long range particle information.
Example 7 includes the vehicle system of Example 5, further comprising a communication system, coupled to the vehicle processing system, configured to communicate with a weather information source.
Example 8 includes the vehicle system of Example 7, wherein the weather information source comprises an operations center.
Example 9 includes the vehicle system of Example 1 wherein said vehicle system is configured to be used in an aircraft.
Example 10 includes a system, comprising: a vehicle processing system is configured to store weather information; a weather sensor coupled to the vehicle processing system; a particle sensor, coupled to the vehicle processing system, configured to sense small and large particles; and user interface(s), coupled to the vehicle processing system, configured to communicate weather information derived from the weather sensor and particle sensor; and a communications system, coupled to the vehicle system, configured to receive weather information, including large and small particle data, for weather systems from a weather information source.
Example 11 includes the system of Example 10, wherein the vehicle is an aircraft.
Example 12 includes the system of Example 10, wherein the weather sensor is a weather radar.
Example 13 includes the system of Example 10, wherein the stored weather information is a three dimensional volumetric representation of the weather information.
Example 14 includes the system of Example 10, wherein the weather information source is one or more other vehicles.
Example 15 includes a method comprising: sensing weather information, including the presence of small and large particles, from a vehicle; identifying, based upon the sensed weather information, the presence of problematic particles, proximate to the vehicle, which may be harmful to the vehicle; and alerting the operator of the vehicle of the problematic particles, proximate to the vehicle, that may be harmful to the vehicle.
Example 16 includes the method of Example 15, wherein sensing weather information, including the presence of small and large particles, from a vehicle further compromises sensing weather information, including the presence of small and large particles, from a vehicle that is an aircraft.
Example 17 includes the method of Example 15, further comprising: identifying at least one alternative path to avoid the harmful particles; selecting an alternative path; and changing the path of the vehicle to the selected alternative path.
Example 18 includes the method of Example 17, wherein changing the path of the vehicle to one of the alternative path(s) further comprises automatically changing the path of the vehicle to one of the alternative path(s)
Example 19 includes the method of Example 15, further comprising remotely receiving and storing weather information from a weather information source.
Example 20 includes the method of Example 15, further comprising transmitting weather information to a weather information source.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A vehicle system comprising:
a weather sensor to provide long-range weather information, including the presence of large particles, where such long-range weather information is configured to be stored in a three dimensional volumetric representation, from which a two dimensional display and hazard information can be derived;
a particle sensor to provide short-range weather information about the presence of small and large particles, wherein the particle sensor is able to differentiate between different types and sizes of particles; and
at least one user interface configured to communicate weather information derived from the weather sensor and particle sensor.

2. The vehicle system of claim 1, wherein the particles detected by the particle sensor include at least one of dust particles, liquid particles, ice particles or ash particles.

3. The vehicle system of claim 1, further comprising a vehicle processing system configured to identify at least one alternative path to avoid particles detected by the weather sensor and the particle sensor.

4. The vehicle system of claim 3, wherein the vehicle processing system includes a database configured to store the three dimensional volumetric representation of weather information; and
wherein the three dimensional volumetric representation is configured to include short range and long range particle information.

5. The vehicle system of claim 3, further comprising a communication system, coupled to the vehicle processing system, configured to communicate with a weather information source.

6. A method comprising:
sensing weather information, including the presence of small and large particles, from a vehicle;
identifying, based upon the sensed weather information, the presence of problematic particles, proximate to the vehicle, which may be harmful to the vehicle; and
alerting the operator of the vehicle of the problematic particles, proximate to the vehicle, that may be harmful to the vehicle.

7. The method of claim 6, further comprising:
identifying at least one alternative path to avoid the harmful particles;
selecting an alternative path; and
changing the path of the vehicle to the selected alternative path.

8. The method of claim 7, wherein changing the path of the vehicle to one of the alternative path(s) further comprises automatically changing the path of the vehicle to one of the alternative path(s)

9. The method of claim 6, further comprising remotely receiving and storing weather information from a weather information source.

10. The method of claim 6, further comprising transmitting weather information to a weather information source.
